# FASCICULE DE BREVET EUROPEEN

(11) **EP 1 135 621 B1**
(45) Date de publication et mention de la délivrance du brevet: **09.10.2002**
(21) Numéro de dépôt: 99950833.6
(22) Date de dépôt: 26.10.1999
(51) Int. Cl.: F16B 37/08

(54) **ATTACHE DE FIXATION NOTAMMENT POUR CABLES, TUYAUTERIES OU ANALOGUES**
KLEMMBEFESTIGUNG FÜR KABEL, ROHRE ODER DERGLEICHEN
HOLD-DOWN FASTENER IN PARTICULAR FOR CABLES, PIPING SYSTEMS OR THE LIKE

(30) Priorité: 02.12.1998 FR 9815214
(43) Date de publication de la demande: 26.09.2001
(73) Titulaire: Rapid S.A., 75852 Paris (FR)
(72) Inventeur: LEON, Jean-Pierre, René, F-78800 Houilles (FR)
(74) Mandataire: Bentz, Jean-Paul
(86) Numéro de dépôt international: FR9902600
(87) Numéro de publication internationale: WO00032950

(56) Documents cités:
- EP-A- 0 683 327
- EP-A- 0 751 597
- DE-U- 29 605 617
- US-A- 5 098 242

## Description

L'invention a pour objet une attache permettant la fixation de pièces, notamment des câbles, tuyauteries ou analogues, sur un élément de construction quelconque ou sur un véhicule.

On connaît déjà des attaches de fixation comprenant, de façon générale, un fût auquel sont associées des parties en forme de berceau aptes à recevoir par exemple un faisceau de câbles, ce fût comportant intérieurement une pluralité de lèvres susceptibles de coopérer avec le filetage d'une vis fixée par sa tête sur par exemple un support appartenant à un véhicule automobile, de telle sorte que l'attache peut être montée sur la vis par simple pression.

Ceci est notamment illustré par le document DE-U-85 25 508.4.

Après insertion de la vis dans le fût de l'attache, ces lèvres coopèrent avec le filet de la vis pour apporter une résistance à l'arrachement de l'attache de fixation.

Cependant, un effort relativement important doit être exercé pour permettre le montage de l'attache de fixation sur la vis.

L'invention a pour but de pallier cet inconvénient en proposant une attache de fixation dont les lèvres présentent une plus grande souplesse lors du montage de l'attache et ceci, pour réduire l'effort de montage, tout en maintenant une résistance importante à l'arrachement de l'attache, après son montage sur la vis.

Ainsi, l'invention a pour objet une attache de fixation du type comportant un fût qui comprend intérieurement une pluralité de levres susceptibles de coopérer avec le filetage d'une vis, lesdites lèvres étant dirigées vers l'intérieur du fût et inclinées dans le sens de l'introduction de ladite vis dans ledit fût, caractérisée en ce que chaque lèvre comporte au moins deux parties, une première partie étant raccordée audit fût et inclinée au repos d'un premier angle par rapport à l'axe du fût, du côté de l'introduction de la vis, et une deuxième partie étant raccordée à la première partie et inclinée au repos d'un deuxième angle par rapport à l'axe du fût, du côté de l'introduction de la vis, le deuxième angle présentant une valeur supérieure à celle du premier angle et étant inférieur à 180°, pour faciliter l'introduction de la vis, tout en maintenant la résistance à l'arrachement de l'attache après introduction de la vis.

De préférence, le premier angle est compris entre 90 et 135°.

Dans un mode préféré de réalisation de l'invention, le premier angle est égal à environ 100° et le deuxième angle à environ 170°.

Le fût de l'attache de fixation comprend avantageusement deux parois parallèles, chacune munie desdites lèvres.

Dans une première variante de réalisation de l'attache de fixation selon l'invention, celle-ci comporte deux parois verticales de guidage de la vis dans ledit fût.

Dans une deuxième variante de réalisation de l'attache de fixation selon l'invention, celle-ci comprend deux ergots ou analogues faisant saillie à l'intérieur dudit fût perpendiculairement à son axe et comportant une partie arquée correspondant sensiblement à la forme extérieure de la vis, lesdits ergots étant situés entre deux lèvres adjacentes.

L'attache de fixation selon l'invention comporte avantageusement au moins une partie en forme de berceau, apte à recevoir des câbles, des tuyauteries ou analogues.

L'invention sera mieux comprise et d'autres buts, avantages et caractéristiques de celle-ci apparaîtront plus clairement dans la description qui suit et qui est faite au regard des dessins annexés, donnés uniquement à titre d'exemples, et dans lesquels.

La figure 1 est une vue de côté et en élévation d'une attache selon l'invention, illustrée en position prête à la fixation au droit d'un élément fileté.

La figure 2 est une vue agrandie du détail A de la figure 1.

La figure 3 est une vue partielle en perspective de l'attache de fixation représentée à la figure 1.

La figure 4 est une vue en coupe selon la ligne IV-IV de la figure 1.

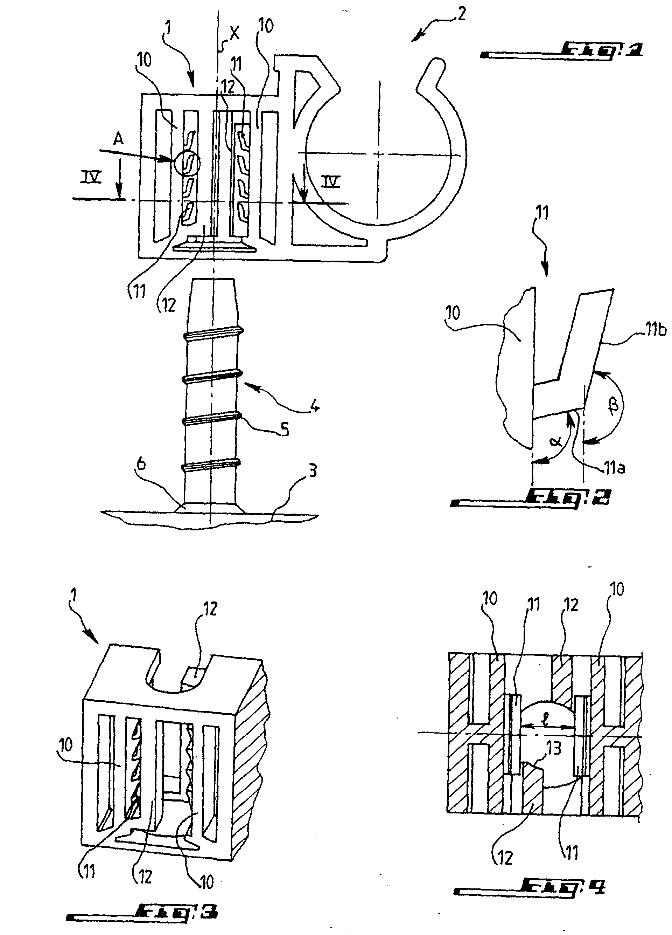

En référence tout d'abord à la figure 1, une attache de fixation selon l'invention comprend essentiellement un fût 1, auquel est associée une partie en forme de berceau 2.

Dans cet exemple de réalisation de l'attache de fixation, celle-ci est apte à recevoir, notamment par clippage dans la partie 2, un faisceau de câbles ou de tuyauteries (non représenté), devant par exemple être rendu solidaire d'un véhicule automobile.

Toujours sur la figure 1, la référence 3 désigne un élément de véhicule comportant une vis 4, du type à filet 5 couché et dont la tête 6 est soudée sur l'élément 3, s'il est métallique.

Le fût 1 de l'attache comporte deux parois parallèles 10 portant une pluralité de lèvres 11 qui sont dirigées vers l'intérieur du fût et inclinées dans le sens de l'introduction de la vis 4 dans le fût 1, c'est-à-dire vers le haut de l'attache 1 selon la figure 1.

Ces lèvres 11 laissent entre elles un passage libre dont la largeur 1 est inférieure au diamètre de la vis 4.

Par ailleurs, des moyens de guidage de la vis à l'intérieur de l'attache, peuvent être prévus dans le fût 1.

Dans l'exemple illustré sur les figures, ces moyens de guidage consistent en deux parois verticales portant la référence 12.

Comme l'illustre plus particulièrement la figure 4, ces parois verticales comportent, du côté de l'axe X du fût 1, une partie arquée et concave 13. Ainsi, ces deux parties 13 opposées et concaves des parois verticales 12 pourront agir suivant un diamètre de la vis pour que l'attache soit guidée sur cette vis lors du montage.

Ces moyens de guidage peuvent également consister en au moins deux ergots ou analogues qui font saillie à l'intérieur du fût, perpendiculairement à son axe.

Ces ergots ne sont pas illustrés sur les figures. On peut se reporter à la demande de brevet français No. 94 06 083 qui décrit de tels ergots et dont le contenu est inclus dans la présente demande.

Ces deux ergots comportent également une partie arquée correspondant sensiblement à la forme extérieure de la vis. Ils sont de plus situés entre deux lèvres adjacentes.

L'attache de fixation selon l'invention peut être montée sur la vis 4 par simple pression, appliquée du haut vers le bas selon la figure 1, et cela de façon à ce que la vis 4 pénètre dans le fût 1.

Les lèvres 11 étant inclinées dans le sens de l'introduction de la vis 4 dans le fût 1, elles offrent une résistance relativement faible à la vis 4 lors du montage. Au contraire, lorsque les lèvres 11 sont en appui sur le filet de vis 5, après introduction de la vis 4 dans le fût, les lèvres 11 confèrent à l'attache de fixation une résistance importante à l'arrachement.

Les lèvres 11 de l'attache de fixation selon l'invention sont conçues pour être particulièrement souples lors du montage de la vis 4, ce qui permet de réduire la résistance qu'elles pourraient opposer à l'insertion de la vis et donc également, de réduire l'effort qui est nécessaire pour réaliser le montage.

La forme particulière qui est donnée aux lèvres 11 de l'attache de fixation selon l'invention est plus particulièrement illustrée à la figure 2.

Chaque lèvre 11 comporte au moins deux parties 11a et 11b.

La première partie 11a est raccordée au fût 1 et plus particulièrement, à une paroi 10 du fût 1. Au repos, c'est-à-dire avant l'introduction de la vis 4 dans le fût 1, cette première partie 11a est inclinée d'un premier angle α par rapport à la paroi 10 ou encore l'axe X du fût, l'angle α étant pris du côté de l'introduction de la vis 4, c'est-à-dire entre la première partie 11a et la partie inférieure de la paroi 10 par rapport à cette première partie 11a.

La deuxième partie llb de la lèvre 11 est raccordée à la première partie 11a. Elle est inclinée au repos d'un deuxième angle β par rapport à la paroi 10 ou encore par rapport à l'axe X du fût, du côté de l'insertion.

Le deuxième angle β présente une valeur supérieure à celle du premier angle α, tout en étant inférieur à 180°.

Dans cette réalisation particulière de la lèvre 11, celle-ci présente deux parties qui sont en pratique articulées l'une par rapport à l'autre, les matériaux utilisés pour réaliser les lèvres étant relativement élastiques.

De ce fait, lors de l'introduction de la vis 4 dans le fût 1, les lèvres 11 sont plus souples que des lèvres réalisées en une seule partie et présentant donc une inclinaison unique par rapport à l'axe du fût.

Lors de l'introduction de la vis 4 dans le fût 1, les deux parties des lèvres peuvent se déformer et offrent une résistance moins importante à la vis que des lèvres classiques.

L'effort de montage qui doit être fourni est donc moins important qu'avec des attaches de fixation classiques.

Par ailleurs, si des forces d'arrachement sont exercées sur l'attache de fixation après introduction de la vis, la première partie 11a des lèvres 11 qui est raccordée à une paroi du fût confère déjà à l'attache de fixation une résistance à l'arrachement. Par ailleurs, la deuxième partie 11b des lèvres 11 ne se déforme pratiquement pas et contribue également à la résistance à l'arrachement de l'attache.

Ainsi, l'attache de fixation selon l'invention permet de faciliter l'introduction d'une vis dans son fût, tout en résistant efficacement à des forces d'arrachement, après introduction de la vis.

Les travaux qui ont été réalisés ont montré que le premier angle α d'inclinaison de la première partie 11a est de préférence compris entre 90 et 135°.

Dans un exemple particulier de réalisation de l'invention, le premier angle α est égal à environ 100°, tandis que le deuxième angle β est égal à environ 170°.

Enfin, de façon préférée, l'attache de fixation est réalisée en une seule pièce par moulage d'une matière plastique appropriée, présentant une certaine élasticité.

L'invention n'est bien sûr pas limitée aux modes de réalisation qui viennent d'être décrits. En particulier, les lèvres 11 pourraient comporter plus de deux parties inclinées les unes par rapport aux autres. On pourrait également prévoir, à l'extrémité de la deuxième partie 11b, une partie légèrement en saillie vers l'axe X du fût, pour contribuer à la résistance à l'arrachement de l'attache de fixation, après introduction d'une vis.

Enfin, les signes de référence insérés après les caractéristiques techniques figurant dans les revendications ont pour seul but de faciliter la compréhension de ces dernières et ne sauraient en limiter la portée.

## Revendications

1. Attache de fixation du type comportant un fût (1) qui comprend intérieurement une pluralité de lèvres (11) susceptibles de coopérer avec le filetage (5) d'une vis (4), lesdites lèvres (11) étant dirigées vers l'intérieur du fût (1) et inclinées dans le sens de l'introduction de ladite vis dans ledit fût, **caractérisée en ce que** chaque lèvre (11) comporte au moins deux parties, une première partie (11a) étant raccordée audit fût (10) et inclinée au repos d'un premier angle (α) par rapport à l'axe (X) du fût, du côté de l'introduction de la vis, et une deuxième partie (11b) étant raccordée à ladite première partie (11a) et inclinée au repos d'un deuxième angle (β) par rapport à l'axe (X) du fût, du côté de l'introduction de la vis, le deuxième angle (β) présentant une valeur supérieure à celle du premier angle (α) et étant inférieur à 180°, de façon à faciliter l'introduction de la vis dans le fût tout en maintenant la résistance à l'arrachement de l'attache après introduction de la vis.

2. Attache de fixation selon la revendication 1, **caractérisée en ce que** ledit premier angle (α) est compris entre 90 et 135°.

3. Attache de fixation selon la revendication 1 ou 2, **caractérisée en ce que** ledit premier angle (α) est égal à environ 100°, tandis que ledit deuxième angle (β) est égal à environ 170°.

4. Attache de fixation selon l'une des revendications 1 à 3, **caractérisée en ce que** ledit fût (1) comporte deux parois parallèles (10), chacune étant munie desdites lèvres (11).

5. Attache de fixation selon l'une des revendications 1 à 4, **caractérisée en ce qu'**elle comporte deux parois verticales (11) de guidage de la vis (4) dans ledit fût (1).

6. Attache de fixation selon l'une des revendications 1 à 4, **caractérisée en ce qu'**elle comporte deux ergots ou analogues faisant saillie à l'intérieur du fût perpendiculairement à son axe et comportant une partie arquée correspondant sensiblement à la forme extérieure de la vis, lesdits ergots étant situés entre deux lèvres adjacentes.

7. Attache de fixation selon l'une des revendications 1 à 6, **caractérisée en ce qu'**elle comprend au moins une partie (2) en forme de berceau apte à recevoir des câbles, tuyauteries ou analogues.

## Patentansprüche

1. Klemmbefestigung vom Typ mit einem Schaft (1), der innen eine Mehrzahl an Zungen enthält (11), die mit dem Gewinde (5) einer Schraube (4) zusammenwirken können, wobei diese Zungen (11) zum Inneren des Schafts (1) gerichtet und in Einführrichtung der genannten Schraube in den Schaft geneigt sind, **dadurch gekennzeichnet, dass** jede Zunge (11) zumindest zwei Teile enthält, nämlich einen ersten Teil (11a), der sich an den Schaft (10) anschließt und in Ruhestellung unter einem auf der Einführseite der Schraube gemessenen ersten Winkel (α) zur Schaftachse (X) geneigt ist, und einem zweiten Teil (11b), der sich an den ersten Teil (11a) anschließt und in Ruhestellung unter einem auf der Einführseite der Schraube gemessenen zweiten Winkel (β) zur Schaftachse (X) geneigt ist, wobei der zweite Winkel (β) einen größeren Wert aufweist als der erste Winkel (α) und kleiner als 180° ist, um so das Einführen der Schraube in den Schaft zu erleichtern, wobei nach Einführen der Schraube der Widerstand gegen Ausreißen der Klemmbefestigung erhalten bleibt.

2. Klemmbefestigung nach Anspruch 1, **dadurch gekennzeichnet, dass** der genannte erste Winkel (α) zwischen 90 und 135° beträgt.

3. Klemmbefestigung nach Anspruch 1 oder 2, **dadurch gekennzeichnet, dass** der genannte erste Winkel (α) gleich etwa 100° ist, während der genannte zweite Winkel (β) gleich etwa 170° ist.

4. Klemmbefestigung nach einem der Ansprüche 1 bis 3, **dadurch gekennzeichnet, dass** der Schaft (1) zwei parallele Wände (10) enthält, wobei jede mit den genannten Zungen (11) versehen ist.

5. Klemmbefestigung nach einem der Ansprüche 1 bis 4, **dadurch gekennzeichnet, dass** sie zwei senkrechte Wände (11) zum Führen der Schraube (4) im Schaft (1) enthält.

6. Klemmbefestigung nach einem der Ansprüche 1 bis 4, **dadurch gekennzeichnet**, das sie zwei Vorsprünge oder dergleichen enthält, die in das Innere des Schafts quer zu dessen Achse vorstehen und einen bogenförmigen Teil aufweisen, der im wesentlichen der Außenform der Schraube entspricht, wobei die genannten Vorsprünge sich zwischen zwei angrenzenden Zungen befinden.

7. Klemmbefestigung nach einem der Ansprüche 1 bis 6, **dadurch gekennzeichnet, dass** sie zumindest einen wiegenförmigen Teil (2) aufweist, der geeignet ist, Kabel, Rohrleitungen oder dergleichen aufzunehmen.

## Claims

1. Fixing clip of the type having a body (1) comprising internally a plurality of lips (11) capable of cooperating with the thread (5) of a screw (4), the said lips (11) being directed towards the interior of the body (1) and inclined in the direction of insertion of the said screw into the said body, **characterized in that** each lip (11) has at least two portions: a first portion (11a) joined to the said body (10) and inclined when at rest at a first angle (α) to the axis (X) of the body on the screw insertion side, and a second portion (11b) joined to the said first portion (11a) and inclined when at rest at a second angle (β) to the axis (X) of the body on the screw insertion side, the second angle (β) being larger than the first angle (α) and less than 180°, so as to facilitate insertion of the screw into the body while maintaining the clip's resistance to detachment once the screw has been inserted.

2. Fixing clip according to Claim 1, **characterized in that** the said first angle (α) is between 90° and 135°.

3. Fixing clip according to Claim 1 or Claim 2, **characterized in that** the said first angle (α) is approximately 100°, whilst the said second angle (β) is approximately 170°.

4. Fixing clip according to any one of Claims 1 to 3, **characterized in that** the said body (1) has two parallel walls (10) each provided with the said lips (11).

5. Fixing clip according to any one of Claims 1 to 4, **characterized in that** it has two vertical walls (11) for guiding the screw (4) inside the said body (1).

6. Fixing clip according to any one of Claims 1 to 4, **characterized in that** it has two toes or similar projecting into the interior of the body perpendicularly to its axis and each having an arc-shaped portion substantially matching the external shape of the screw, the said toes being located between two adjacent lips.

7. Fixing clip according to any one of Claims 1 to 6, **characterized in that** it comprises at least one portion (2) in the form of a cradle and adapted to receive cables, pipes or similar.
